# FASCICULE DE BREVET EUROPEEN

(11) **EP 0 434 567 B1**
(45) Date de publication et mention de la délivrance du brevet: **13.07.1994**
(21) Numéro de dépôt: 90403717.3
(22) Date de dépôt: 20.12.1990
(51) Int. Cl.: G01J 1/08

(54) **Procédé pour étalonner un instrument d'optique et ses applications**
Verfahren zur Kalibrierung eines optischen Instruments, sowie ihre Anwendungen
Method for calibrating an optical instrument, and its applications

(30) Priorité: 22.12.1989 FR 8917100
(43) Date de publication de la demande: 26.06.1991
(73) Titulaire: CENTRE NATIONAL D'ETUDES SPATIALES, F-75039 Paris Cedex 01 (FR)
(72) Inventeur: Deshayes, Jean-Pierre, F-3150 Montgiscard (FR)
(74) Mandataire: Schrimpf, Robert

(56) Documents cités:
- FR-A- 519 081
- GB-A- 1 603 599
- US-A- 4 749 271
- APPLIED OPTICS, vol. 27, no. 3, 1 février 1988, pages 619-626; M.R. TORR et al.: "Imaging spectrometer for high resolution measurements of stratospheric trace constituents in the ultraviolet"
- IEEE TRANSACTIONS ON GEOSCIENCE AND REMOTE SENSING, vol. 27, no. 2, mars 1989, pages 136-143, IEEE, New York, US; A.F.H. GOETZ et al.: "The high resolution imaging spectrometer (HIRIS) for Eos"
- PATENT ABSTRACTS OF JAPAN, vol. 12, no. 173 (P-706)[3020], 24 mai 1988;& JP-A-62 284 220

## Description

L'invention concerne l'étalonnage, au moyen d'une source de lumière, d'un instrument optique radiométrique dont le plan focal contient des détecteurs photoélectriques tels que des détecteurs à transfert de charges, qui convertissent l'éclairement de l'image en un signal électrique et elle s'applique notamment à l'étalonnage, en vol, d'un instrument embarqué à bord d'un satellite.

Elle s'applique, en particulier, à l'étalonnage de l'optique de visée du dispositif d'observation de la terre.

On connaît (IEEE Transactions on Geoscience and remote sensing, vol. 27, no.2, mars 1989, pages 136-143) un dispositif d'étalonnage qui comporte un réflecteur placé devant l'instrument pour réfléchir la lumière solaire vers l'ouverture de l'instrument, pour réaliser un étalonnage radiométrique en vol.

Un tel réflecteur est encombrant et est susceptible de se dégrader dans le temps.

Le but de l'invention est de fournir un dispositif d'étalonnage photométrique, c'est-à-dire permettant la mesure de grandeurs photométriques, qui soit suffisamment léger et suffisamment peu encombrant pour pouvoir être embarqué à bord d'un satellite et pour pouvoir rester en place en permanence sans gêner le fonctionnement normal de l'instrument d'optique.

Selon l'invention, on dispose la source de lumière dans la pupille d'entrée ou dans le diaphragme d'ouverture de l'instrument.

L'invention s'applique aussi bien aux instruments d'optique comportant une pupille d'entrée réelle qu'aux instruments d'optique comportant une pupille d'entrée virtuelle.

Dans le premier cas, selon l'invention, on étalonne l'instrument d'optique au moyen d'une source de lumière disposée dans la pupille d'entrée.

Dans le second cas, selon l'invention, on étalonne l'instrument d'optique au moyen d'une source de lumière placée dans le diaphragme d'ouverture de l'instrument.

La source de lumière est choisie suffisamment petite pour que l'occultation qu'elle constitue pour la prise de vue soit considérée comme négligeable.

Cette source est par exemple constituée par une diode électroluminescente ou par l'extrémité d'une fibre optique transmettant au centre de la pupille d'entrée ou du diaphragme d'ouverture la lumière d'une source étalon placée à distance et qui est par exemple le soleil.

La figure 1 est un schéma de principe d'un dispositif utilisant le procédé conforme à la présente invention, et
- la figure 2 est un schéma d'une application de ce dispositif.

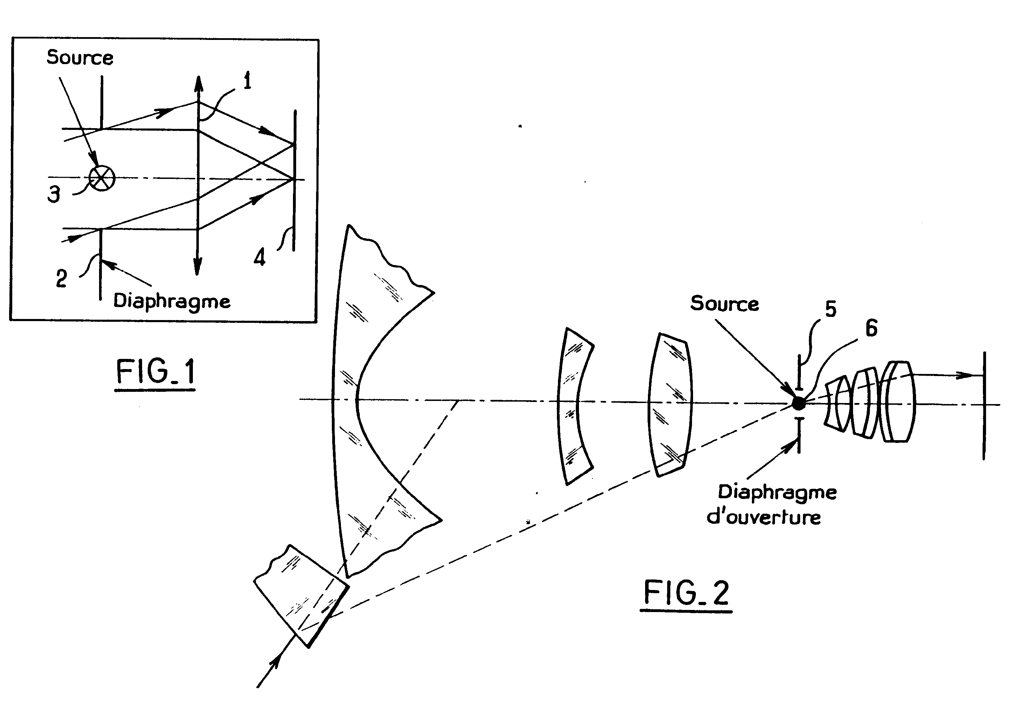

Sur la figure 1, on a schématisé la lentille 1 d'un objectif et on a placé au centre du diaphragme 2 de cet objectif une source de lumière 3 qui, du fait de sa position, produit un éclairage uniforme du plan focal 4 de la lentille 1.

Sur la figure 2, on a représenté les différentes lentilles d'un objectif de visée complexe et son diaphragme d'ouverture 5 au centre duquel, conformément à l'invention, on place une petite source de lumière 6 qui est, par exemple, l'extrémité d'une fibre optique montée fixement au satellite.

Cet objectif est par exemple l'objectif télécentrique d'un dispositif de prise de vue de la végétation embarqué à bord d'un satellite.

L'invention permet de s'assurer que les signaux provenant de l'objectif sont bien représentatifs des grandeurs d'entrée.

L'invention n'est pas limitée à la réalisation qui a été décrite.

## Revendications

1. Procédé pour étalonner, au moyen d'une source de lumière, un instrument d'optique radiométrique dont le plan focal contient des détecteurs photoélectriques qui convertissent l'éclairement de l'image en un signal électrique, caractérisé en ce qu'on dispose ladite source (3,6) dans la pupille d'entrée (2) ou dans le diaphragme d'ouverture (5) de l'instrument.

2. Procédé selon la revendication 1, caractérisé en ce qu'on dispose ladite source (3,6) au centre de la pupille d'entrée ou du diaphragme d'ouverture (2,5).

3. Procédé selon la revendication 1 ou 2, caractérisé en ce qu'on constitue ladite source (3,6) par une diode électroluminescente.

4. Procédé selon la revendication 1 ou 2, caractérisé en ce qu'on constitue ladite source (3,6) par l'extrémité d'une fibre optique qui transmet la lumière d'une source étalon.

5. Procédé selon la revendication 4, caractérisé en ce qu'on utilise le soleil comme source étalon.

6. Application d'un procédé selon l'une des revendications 1 à 5, à l'étalonnage, en vol, d'un appareil d'observation de la terre ou autre instrument d'optique embarqué à bord d'un satellite.

## Patentansprüche

1. Verfahren zum Eichen eines optisch radiometrischen Instrumentes mittels einer Lichtquelle, wobei die fokale Ebene des Instrumentes photoelektrische Detektoren enthält, die die Helligkeit des Bildes in ein elektrisches Signal umwandeln, dadurch gekennzeichnet, daß die genannte Quelle (3, 6) in der Eintrittspupille (2) oder in der Öffnungsmembran (5) des Instrumentes angeordnet ist.

2. Verfahren nach Anspruch 1, dadurch gekennzeichnet, daß die genannte Quelle (3, 6) in der Mitte der Eintrittspupille oder der Öffnungsmembran (2, 5) angeordnet ist.

3. Verfahren nach Anspruch 1 oder 2, dadurch gekennzeichnet, daß die genannte Quelle (3, 6) aus einer Lumineszenzdiode besteht.

4. Verfahren nach Anspruch 1 oder 2, dadurch gekennzeichnet, daß die genannte Quelle (3, 6) aus dem Ende einer optischen Faser besteht, welche das Licht einer Eichquelle überträgt.

5. Verfahren nach Anspruch 4, dadurch gekennzeichnet, daß die Sonne als Eichquelle dient.

6. Anwendung eines Verfahrens gemäß einem der Ansprüche 1 bis 5 bei der Eichung einer fliegenden Beobachtungsvorrichtung von der Erde oder einem anderen optischen Instrument, das sich an Bord eines Satelliten befindet.

## Claims

1. A method of calibrating a radiometric optical instrument by means of a light source, the focal plane of the optical instrument containing photoelectric detectors which convert image brightness into an electrical signal, the method being characterized in that said source (3, 6) is disposed in the entrance pupil (2) or in the aperture diaphragm (5) of the instrument.

2. A method according to claim 1, characterized in that said source (3, 6) is disposed in the center of the entrance pupil or of the aperture diaphragm (2, 5).

3. A method according to claim 1 or 2, characterized in that said source (3, 6) is constituted by a light emitting diode.

4. A method according to claim 1 or 2, characterized in that said source (3, 6) is constituted by one end of an optical fiber which transmits light from a calibration source.

5. A method according to claim 4, characterized in that the sun is used as the calibration source.

6. An application of the method according to any one of claims 1 to 5 to in-flight calibration of a camera for observing the Earth or to any other optical instrument on board a satellite.
